# EUROPEAN PATENT APPLICATION

(11) **EP 1 347 616 A2**
(43) Date of publication of application: **24.09.2003**
(21) Application number: 03251010.9
(22) Date of filing: 19.02.2003
(51) Int. Cl.: H04L 29/06, H04N 1/00

(54) **Secure communication via a web server**

(30) Priority: 11.03.2002 US 95602
(71) Applicant: Hewlett-Packard Company, Palo Alto, CA 94304 (US)
(72) Inventor: Henry, Steven G., Fort Collins, CO 80526 (US); Wolf, John P., Eagle, ID 83616 (US)
(74) Representative: Jackson, Richard Eric

(57) **Abstract**

Methods and systems for establishing and providing secure communication between a device (21, 37, 27) and a computer system (70, 80, 90) are described. A representative method includes: establishing a secure communication link (50) between the device (21,37,27) and a web server (60) by utilizing a security protocol; accessing a programming process located on the web server (60); sending security information to the programming process, wherein the security information is provided to a computer system (70, 80, 90) by programming calls made from the programming process; and receiving a response from the computer system (70, 80, 90) via the programming process. Systems, devices, and other methods are also provided.

## Description

### FIELD OF THE INVENTION

The present invention generally relates to computing devices. More specifically, the invention relates to methods and systems for securely communicating between devices.

### DESCRIPTION OF THE RELATED ART

A typical local area network (LAN) includes a network server interconnected to a number of devices. The network server is typically a computer having a relatively large amount of memory and that maintains a database of files that each of the devices connected thereto may access. The devices are connected to the network server through the LAN and may include network client devices such as computer workstations or networked microcomputers, printers, scanners, etc.

Scanners are typically used to convert printed material into electronic digital form. Once a scanner converts printed material into electronic digital form, the digital representation of the printed material can be sent over the network.

A transmission device that sends digital information over the network can be referred to as a "digital sender." Digital senders are typically used in email and electronic fax applications to provide the communication protocol over which digital information is communicated. A digital sender can incorporate a scanner.

A multi-function peripheral (MFP) is a transmission device that includes a digital sender and a printer. MFPs can be used to perform faxing, printing, scanning, and sending email and documents in electronic digital form across a network. One type of MFP is an "All-In-One" device. Typically, "All-In-One" devices are low-end MFPs and usually cannot connect directly with a network. Another type of MFP is a digital network copier which is typically a high-end MFP with, for example, greater pages scanned/copied per minute capability than lower-end MFPs.

Digital senders and MFPs have the ability to scan an image (possibly in color), store the scanned information in a file, and send the file as an attachment to an email, or in the body of the email itself. Digital senders and MFPs can also send the file to a specific file location as decided by the user.

In some applications, it is desirable to have a secure communication link from an MFP or digital sender to another device, either within the LAN or external via the Internet. For example, in the corporate environment, it can be critical to allow only registered users to access corporate database information. Typically, providing a secure link includes providing some form of user identification and authentication as well as communication over a secure link.

Unfortunately, the operating system(s) or associated security protocol(s) required to enable the establishment of a secure link may not be included in the MFPs. For example, many devices do not have the capability to securely communicate with Windows-based systems. These devices may not be able to authenticate a user and so cannot gain access to database information that resides on a Windows-based system.

In keeping with the present example, one possible solution is to incorporate an operating system within the particular device that can communicate with Windows-based systems. However, this can increase the complexity of the device and, thus, increase the cost of the device.

Some transmission devices incorporate an operating system, but cannot communicate securely with Windows-based systems and, furthermore these devices typically require additional software or firmware to facilitate secure communication.

Based on the foregoing, it should be appreciated that there is a need for improved systems and methods that address the aforementioned and/or other shortcomings of the prior art.

### SUMMARY OF THE INVENTION

The present invention relates to secure communication over a computer network. In this regard, a representative method for establishing secure communication includes: establishing a secure communication link with a web server by utilizing a security protocol; accessing a programming process located on the web server; sending security information to the programming process, wherein security information is provided to a computer system by programming calls made from the programming process; and receiving a response from the computer system via the programming process.

Embodiments of the invention may also be construed as a secure communication system configured to access stored information in a computer system. The communication system includes a web server configured to store a file containing programming language for a programming process. The web server is configured to securely communicate with the computer system by means of programming calls made from the programming process and also to securely communicate with a transmission device via a secure communication link utilizing a security protocol, therefore, facilitating communication between the transmission device and the computer system in order to access the information.

### BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is a schematic representation of a communication system in which various transmission devices may be connected.
FIG. 2 is a schematic view of a transmission device shown in FIG. 1.
FIG. 3 is a schematic representation of an embodiment of a secure communication system of the present invention.
FIG. 4 is a flow chart illustrating a representative embodiment of a method of the present invention as performed by the communication system of FIG. 3.
FIG. 5 is a flow chart illustrating the method of FIG. 4 from the perspective of a web server 60.

### DETAILED DESCRIPTION

As will be described in greater detail herein, systems and methods of the invention can establish, and thus provide, a secure communication link between a device and a computer system via a web server. Sensitive information can then be securely passed between the computer system(s) and the device. In some embodiments, this can be accomplished even though the device may not, otherwise, be able to establish a secure communication link with the computer system(s).

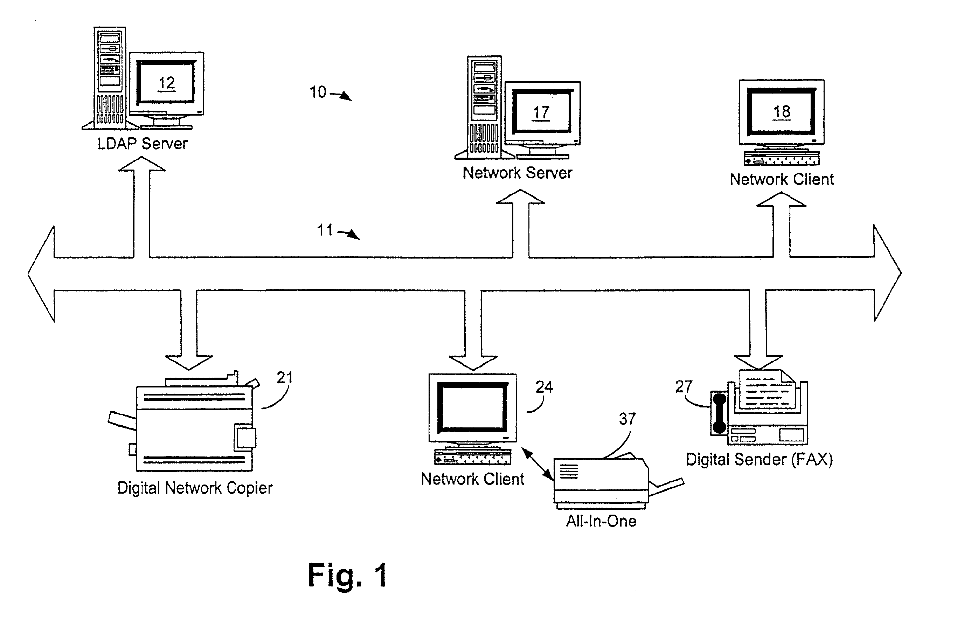

Referring now in more detail to the drawings, in which like numerals indicate corresponding parts throughout the several views, FIG. 1 is a schematic representation of a communication system 10 in which various transmission devices may be connected. As indicated in this figure, the system 10 generally comprises several transmission devices (21,37, 27) that are capable of operating as peripheral devices and/or as stand-alone (walk-up) devices. Generally speaking, a transmission device comprises a device that is capable of transmitting data to a destination device. For instance, the transmission device can comprise a digital sender 27, such as Hewlett-Packard Digital Sender 9100C™, which is capable of transmitting data via email. Another transmission device described in FIG. 1 is a digital network copier 21. A third transmission device is an "All-In-One" 37 directly coupled with a network client 24. As mentioned earlier, the digital network copier 21 and the "All-In-One" 37 are also commonly known as multi-functional peripherals. Although these three examples have been explicitly identified, it is to be appreciated that a transmission device can comprise any other device that is capable of transmitting data to a destination device.

In addition to the transmission devices, the network 10 can include several other computing devices (12, 17, 18) that are capable of receiving data from the transmission devices. It should be noted that a computing device may incorporate several other computing devices, in which case, it may be referred to as a computer system. It should be appreciated that computing devices and computing systems may be used interchangeably. By way of example, the computing devices can be a network client 18, a network server 17, and a Lightweight Directory Access Protocol (LDAP) server 12. Although these three are identified in FIG. 1 and discussed herein, it will be appreciated that a wide variety of devices could, alternatively, comprise another type of computing device including, for instance, a notebook computer, Macintosh™ computer, personal digital assistant (PDA), mobile telephone, *etc*.

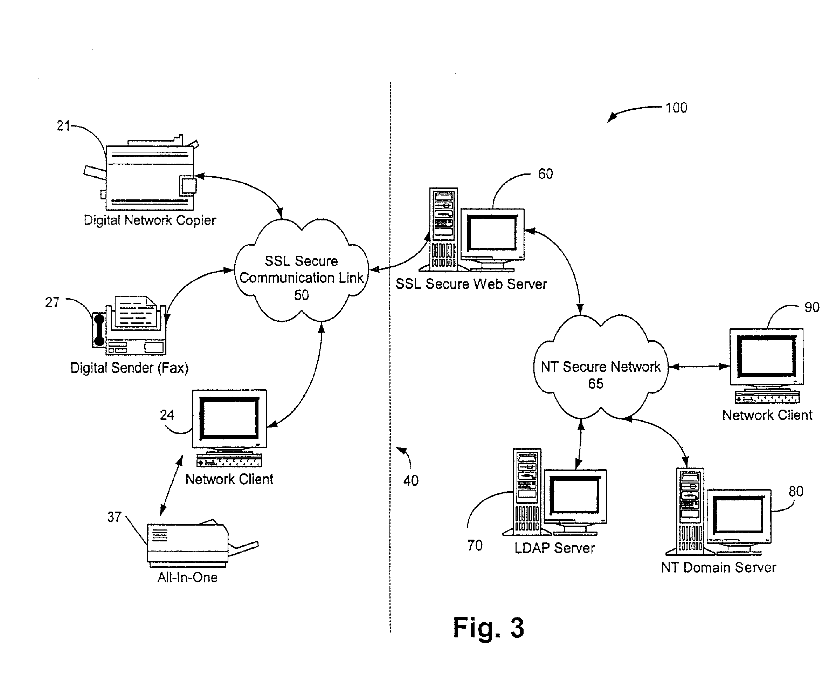

As is further identified in FIG. 1, the transmission devices and the computing devices are connected to a network 11 that typically comprises one or more sub-networks that are communicatively coupled to each other. By way of example, these networks can include one or more local area networks (LANs) and/or wide area networks (WANs). Indeed, in some embodiments, the network 11 may comprise a set of networks that forms part of the Internet. Of importance, though, is that the transmission devices may not be able to communicate securely with the computing devices in the system 10 described in FIG. 1. For instance, the entire network 11 may be inside a corporate network and may be protected from outside intruders by a firewall. In this case secure communication is accomplished passively by the firewall. This system 10, will not allow secure communication across the firewall because the proper security algorithms may not be installed in the transmission devices. This scenario will be discussed in FIG. 3.

A network client 18 may be, for example, a personal computer (PC) or a workstation. Typically, the transmission devices would send the digital information it processed to a server. This information can then be accessed by the network client 18, through email software or from a file management program. In a typical network, several network clients 18 may be connected.

A network server 17 can handle and monitor the network traffic running on the network 11. For smaller networks, the network server may be the only server on the network. In larger networks, the network server 17 can facilitate the connection of the various servers and network clients 18. The network server 17, may also monitor and facilitate the traffic between the network 11 and other networks. In this case, the network server 17 may operate the software/firmware to manage the firewall protecting the network 11. The network server 17, may contain a file depository in which the transmission devices can deposit information. The depository could then be accessed by the various network clients 18. The network server 17 may also facilitate the email communication of the digital information received from the transmission devices.

Another server in the system 10 that can be connected to the network 11 is a LDAP server 12. LDAP server 12 can access a global address database. A global address database, typically, includes network-wide information such as email addresses and fax numbers of all clients and devices connected to the system 10. For example, a global address database may include all information regarding employees of a corporation that use the system 10. The transmission devices oftentimes must access the global address database in order to obtain email information. In the case where a firewall protects the entire system 10, the communication between the LDAP server 12 and the transmission devices may be secure. In the case where a firewall does not protect the entire system 10, this communication may not be secure. In this case, sensitive information contained within the global address database may not be securely passed from the LDAP server 12 to the transmission devices.

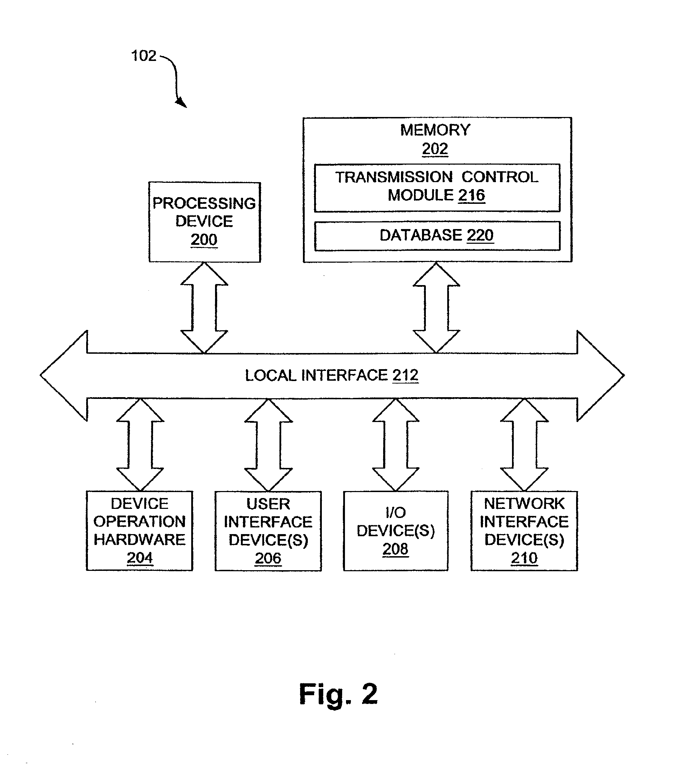

FIG. 2 is a schematic view illustrating an example architecture for a transmission device shown in FIG. 1. As indicated in FIG. 1, examples of a transmission device are a digital network copier 21, an "All-In-One" 37 directly coupled with a network client 24, and a digital sender 27. The transmission device 102 can comprise a processing device 200, memory 202, device operation hardware 204, one or more user interface devices 206, one or more input/output (I/O) devices 208, and one or more network interface devices 210. Each of these components is connected to a local interface 212 that, by way of example, comprises one or more internal buses. The processing device 200 is adapted to execute commands stored in memory 202 and can comprise a general-purpose processor, a microprocessor, one or more application-specific integrated circuits (ASICs), a plurality of suitably configured digital logic gates, and other electrical configurations that may be comprised of discrete elements both individually and/or in various combinations to coordinate the overall operation of the transmission device 102.

The device operation hardware 204 comprises the various components with which the core functionalities of the transmission device 102 are facilitated. For example, where the transmission device 102 is designed to transmit email messages (*i.e*., the digital sender 27), the transmission device comprises the various components that facilitate such transmission. In addition, the device operation hardware 204 may include other components such as a scanning mechanism and a print engine (*i.e*., the digital network copier 21).

The one or more user interface devices 206 typically comprise interface tools with which the device settings can be changed and through which the user can directly communicate information to the transmission device 102. By way of example, the user interface devices 206 comprise an alphanumeric keyboard with which textual information can be entered and various function keys and/or buttons with which the operation of the transmission device 102 can be controlled. In addition, the user interface devices 206 can comprise a display with which text and/or graphics can be presented to the user. Such a display can, for instance, comprise a liquid crystal display (LCD), a light emitting diode (LED) display, plasma screen, *etc*. Optionally, the display can be touch-sensitive such that user commands and selections can be entered with the display.

With further reference to FIG. 2, the one or more I/O devices 208 are adapted to facilitate connection of the transmission device 102 (*i.e*., the "All-In-One" 37) to another device, such as a computing device 108, and may therefore include one or more serial, parallel, small computer system interface (SCSI), universal serial bus (USB), IEEE 1394 *(e.g.,* Firewire™), and/or personal area network (PAN) components. The network interface devices 210 comprise the various components that are used to transmit and/or receive data over the network 11. By way of example, the network interface devices 210 include a device that can communicate both inputs and outputs, for instance, a modulator/demodulator (*e.g*., modem), wireless (*e.g*., radio frequency (RF)) transceiver, a telephonic interface, a bridge, a router, network card, *etc*. In the case of the All-In-One 37, network interface device 210 may be located in the network client 24.

The memory 202 includes various software and/or firmware programs including a transmission control module 216. The transmission control module 216 comprises the various software and/or firmware that controls transmissions from the device 102 whether they be secure or insecure transmissions. For instance, the transmission control module 216 may comprise software and/or firmware that sets up a Secure Sockets Layer (SSL) protocol. The SSL protocol is a commonly-used protocol for managing the security of a message transmission on the Internet. SSL uses a program layer located between the Internet's Hypertext Transfer Protocol (HTTP) and Transport Control Protocol (TCP) layers. SSL is included as part of both the Microsoft and Netscape browsers and most Web server products. The "sockets" part of the term refers to the sockets method of passing data back and forth between a client and a server program in a network or between program layers in the same computer. SSL uses the public-and-private key encryption system.

Briefly, the public-and-private key encryption system involves multiplying two large prime numbers (a prime number is a number divisible only by that number and 1) and through additional operations deriving a set of two numbers that constitutes the public key and another set that is the private key. Once the keys have been developed, the original prime numbers are no longer important and can be discarded. Both the public and the private keys are needed for encryption /decryption but only the owner of a private key ever needs to know it. Using this system, the private key never needs to be sent across the Internet. The private key is used to decrypt text that has been encrypted with the public key. Although the SSL protocol has been described, other security protocols, such as the transport layer security (TLS) protocol could be used to accomplish secure communication.

The memory 202 can, optionally, include a database 220 that can be used to store various information including, for instance, email addresses of desired email recipients and/or network addresses of other destinations.

Various software and/or firmware programs have been described herein. It will be appreciated that the various software and/or firmware programs, such as the SSL protocol comprise an ordered listing of executable instructions for implementing logical functions and can be embodied in any computer-readable medium for use by or in connection with an instruction execution system, apparatus, or transmission device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the information system, apparatus, or device. The computer readable medium can be, for example but not limited to, an electronic, magnetic, optical, electromagnetic, infrared, or semiconductor system, apparatus, device, or propagation medium. More specific examples (a non-exhaustive list) of the computer-readable media would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

Attention is now turned to FIG. 3, which is a schematic representation of an embodiment of a secure communication system 100 of the present invention. In this embodiment, the transmission devices (21,27,37) can securely communicate, indirectly, with the computing devices (70,80,90).

The transmission devices can establish a secure communication link 50 with a web server 60. From there, the web server can securely communicate with the computing devices. The communication between the web server 60 and the computing devices may be secure by a particular protocol or may just be a trusted communication because the web server 60 and the computing devices are behind a security firewall 40.

As described above, the digital network copier 21, the digital sender 27, and the "All-In-One" 37 via the network client 24, may not include the appropriate firmware/software to securely communicate with the computing devices. In this embodiment, the computing devices may all be running on the Microsoft Windows NT operating system™. Windows NT requires certain security application program interfaces (APIs) in order for applications to be written and operated to allow secure communication with the computing devices. In order to obtain the APIs and the means to process the calls made from the APIs, specific firmware/software may have to be installed in the devices intended to communicate securely with the computing devices. Perhaps an entire operating system may have to be installed in the device. This, as well as the updates and maintenance of the firmware may be expensive and adds to the complexity of the devices. In another example, the different computing devices may be running on a variety of different operating systems, such as Linux™, Unix™, MacOS™, Windows 98™, etc. Each of these operating systems may require a different security firmware in the communicating transmission devices.

In this embodiment, the transmission devices use the SSL protocol to establish the secure communication link 50 with the web server 60. The intended user of, for example, the digital sender 27, can key in his/her user name and password into the digital sender 27. Other possible ways of inputting the security information could be used such as card scanning, finger printing, *etc*. This information is encrypted and passed using a secure protocol, such as the SSL protocol, to the web server 60. Once the SSL secure communication link 50 is established, the user can then be authenticated. From there, the web server 60 can access a programming process stored on the web server 60. In this embodiment the programming process is a web page. A web page is a document that is written in the hypertext markup language (HTML) or some other Web language to display data. A web page may also have functionality provided to it by the Web language. It could be written in the extensible markup language (XML) as well, and it does not have to be displayed to the user. The web page is stored in a file located on the web server. The file that stores the web page may also contain other information that enables the web server 60 to communicate with the computing devices by programming calls made from the web page. In other embodiments of the present invention other programming processes could be used. For example, a servlet running on the web server 60 could be accessed and utilized to communicate the secure information. A servlet is a small program that runs on a server. An executing Java thread is commonly known as a servlet. Other examples of programming processes that could be used are a Common Gateway Interface (CGI) script, an Active Server Page (ASP) script, and a Visual Basic (VB) script. It should be noted that these are examples of programming processes that could be used and the embodiments of the present invention are not intended to be limited to those mentioned within this description.

In keeping with the present example, once the SSL secure communication link 50 is established between the digital sender 27 and the web server 60, the web page can be accessed resulting in the prompting for user name and password, the web server establishes a security context for the just authenticated user and returns a web page or executes a programmed process evoking a web response. The established security context as well as the web response, can then be used to access other information stored on the computing devices through a secure network 65. In this embodiment, the network 65 is secured by the Windows NT operating system™. This could be accomplished by providing and enabling the appropriate Windows NT security policies and firmware/software to the web server 60 and the computing devices. Security firewall 40 maintained by an NT network could facilitate secure communication across the public Internet. In other embodiments, as mentioned earlier, the secure network 65 may facilitate communication between the web server 60 and computing devices running on various operating systems.

Using the user name and password received, the web page can access various databases stored throughout the computing devices. For example, the LDAP server 70 may contain the global address database (FIG. 1). This database may be queried with the user name and password (or likewise a key generated by the user name and password) to retrieve the user's address book or identify the available file depositories. Generally, the address book would contain email addresses and other related information. Each user may have different address books and also different available file depositories. For example, different security clearance levels within an organization may have access to different file depositories. The different security levels are obviously verified by the user name and password. This information can be passed back to the web server 60, where in turn it can be encrypted using SSL and passed back to the digital sender 27.

In the discussion that follows, flow charts are provided. It is to be understood that any process steps or blocks in these flow charts represent modules, segments, or portions of code that include one or more executable instructions for implementing specific logical functions or steps in the process. It will be appreciated that, although particular example process steps are described, alternative implementations are feasible. Moreover, steps may be executed out of order from that shown or discussed, including substantially concurrently or in reverse order, depending on the functionality involved.

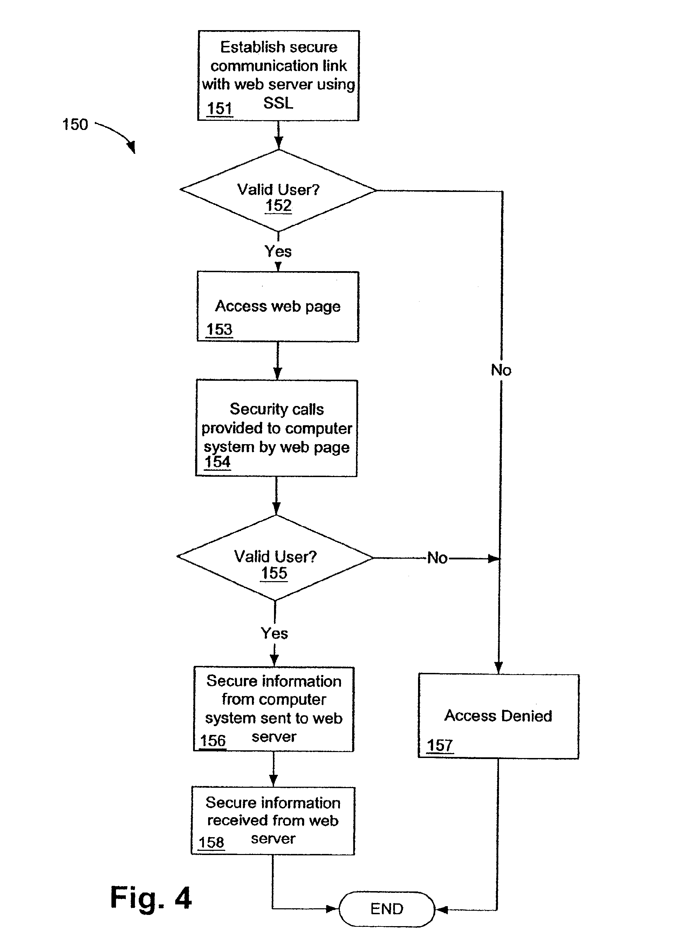

FIG. 4 is flow chart illustrating a representative embodiment of a method 150 of the present invention. The method begins once a user has keyed in his/her user information, such as user name and password, into the transmission device. This could also be accomplished with, for example, a fingerprint scan or a key card or some other form of security credentials that contains the user information. A communication link between device and web server 60 (FIG. 3) is first established , step 151, using a security protocol. In this embodiment, the SSL protocol is utilized, although other protocols could be used such as TLS (FIG. 2). At this point a web resource, a page or application, is accessed and the device is prompted for user security credentials. The user is then authenticated (step 152) by the web server. Once the user is authenticated, a web server resource 60 can return an associated response, a page or programmatic response, (step 153). If the user is not valid, access is denied and the process terminates (step 157). Once a secure communication link is established and the device user is authenticated, a web resource, whether a page of content or a programmatic response, is made accessible to any one of the transmission devices (21,27,37). In fact, multiple transmission devices can perform these steps simultaneously, assuming the web server can support the multiple communications.

It should be noted that a web page may not be the only utility available at the web server to provide secure communication. Any response generating web resource could be utilized such as a servlet, a CGI script, an ASP script, or a VB script.

Once the web page is accessed, the user name and password can be provided to a computer system (or computing device) by programming calls made from the web page (step 154). The web server may also contain the functionality of verifying the user name and password and creating an associated security context (step 155). A security context that is applicable to the computer system hosting the web server and all of the computer system's networked peers. The user name and password (or security context) can then be verified by the computer system (step 155). This step can be eliminated in other embodiments so as to eliminate the redundancy.

The computer system can then retrieve information from its databases and securely send the information back to the web server (step 156). From there, this information can be encrypted and passed along the secure communication link to the transmission device (step 158).

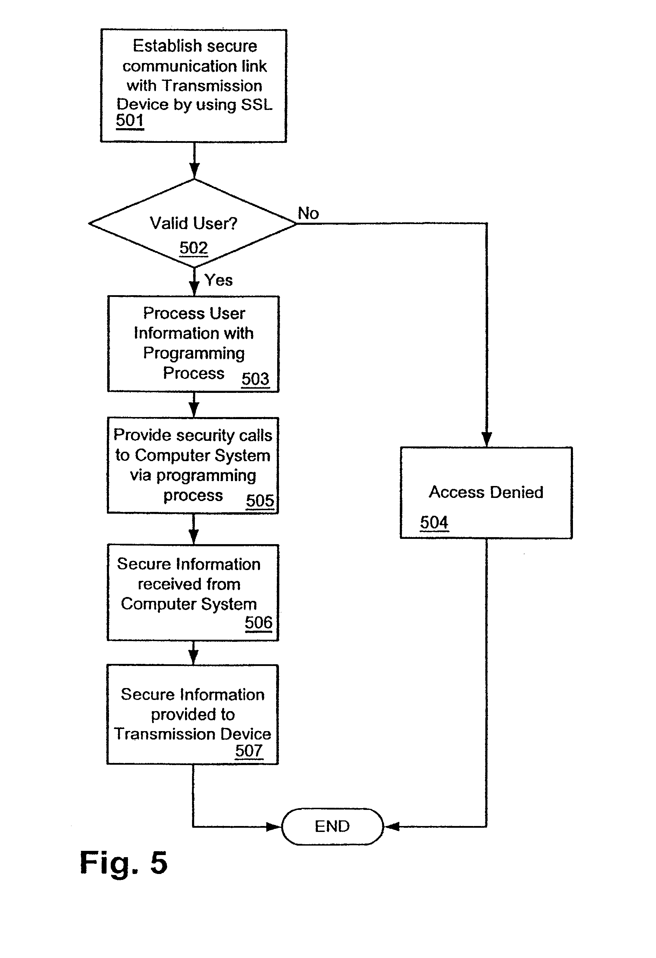

FIG. 5 is flow chart illustrating the method of FIG. 4 seen from the perspective of the web server 60. The method begins when a request to establish a secure communication link 50 is received from a transmission device (21,27,37). The secure communication link 50 is established by using a security protocol (step 501). In this embodiment, the SSL protocol is utilized, although other protocols could be used such as TLS (FIG. 2). The user is then authenticated (step 502). Once the user is authenticated, a programming process residing on the web server 60 can process the user information to set up communication with the computer system (step 503). This may require deriving a security context or perhaps translating the user name and password into language the programming process and the computer system understand. In this embodiment, the preferred programming process is a web page. If the user is not valid, access is denied and the process terminates (step 504).

Once the web page is accessed, the user name and password can be provided to a computer system (or computing device) by programming calls made from the web page (step 505). Retrieved information from the computer system can then be received by the web server 60 (step 506). From there, this information can be encrypted and passed along the secure communication link to the transmission device (step 507).

It should be emphasized that the above-described embodiments of the present invention, are merely possible examples of implementations, merely set forth for a clear understanding of the principles of the invention. Many variations and modifications may be made to the above-described embodiment(s) of the invention without departing substantially from the spirit and principles of the invention. For example, it will be appreciated by those skilled in the art that the particular format of the information and medium on which it is communicated could be chosen from any means capable of doing so. Additionally, other methods for establishing and providing a secure communication link could be used. All such modifications and variations are intended to be included herein within the scope of the present invention and protected by the following claims.

## Claims

1. A method for establishing secure communication by a device (21, 37, 27), the method comprising:
establishing a secure communication link (50) between the device and a web server (60) by utilizing a security protocol;
accessing a programming process located on the web server (60);
sending security information to the programming process, wherein the security information is provided to a first computer system (70, 80, 90) by programming calls made from the programming process, wherein the first computer system (70, 80, 90) operates by use of an operating system; and
receiving a response from the first computer system (70, 80, 90) via the programming process.

2. The method of claim 1, wherein the device (21, 37, 27) lacks an ability to directly and securely communicate with the operating system of the first computer system (70, 80, 90).

3. The method of claim 1, wherein the device (21, 37, 27) is a multi-functional peripheral (MFP) configured to scan a document and convert the document to digital information, the MFP being further configured to send the digital information over a network.

4. The method of claim 1, wherein the communication link (50) is established and secured by the device (21, 37, 27) utilizing the Secure Sockets Layer (SSL) protocol.

5. The method of claim 1, wherein the programming process is at least one of: a web page, a servlet, and a common gateway interface (CGI) script.

6. A transmission device (21, 37, 27) configured to scan a document and convert the document to digital information, the device (21, 37, 27) being configured to send the digital information over a network, the transmission device (21, 37, 27) comprising:
means for establishing a secure communication link (50) between the device and a web server (60) by utilizing a security protocol;
means for accessing a programming process located on the web server (60);
means for sending security information to the programming process, wherein the security information is provided to a first computer system (70, 80, 90) by programming calls made from the programming process, wherein the first computer system (70, 80, 90) operates by use of an operating system; and
means for receiving a response from the computer system (70, 80, 90) via the programming process.

7. The transmission device (21, 37, 27) of claim 6, wherein the device (21, 37, 27) lacks an ability to directly and securely communicate with the operating system that operates the first computer system (70, 80, 90).

8. The transmission device (21, 37, 27) of claim 6, wherein the communication link (50) is established and secured by utilizing the Secure Sockets Layer (SSL) protocol.

9. A secure communication system configured to gain access to information in at least a first computer system (70, 80, 90), wherein the communication system comprises:
a web server (60), the web server (60) is configured to:
store a file containing programming language for a programming process;
securely communicate with at least the first computer system (70, 80, 90) by means of programming calls made from the programming process; and
communicate with a transmission device (21, 37, 27) via a secure communication link (50) that utilizes a security protocol, wherein the transmission device (21, 37, 27) lacks an ability to directly and securely communicate with the operating system that operates the first computer system (70, 80, 90), therefore facilitating communication between the transmission device (21, 37, 27) and at least the first computer system (70, 80, 90) in order to gain access to the information.

10. The system of claim 9, wherein the communication link (50) is secured by utilizing the Secure Sockets Layer (SSL) protocol.
